# EUROPÄISCHE PATENTANMELDUNG

(11) **EP 4 804 389 A1**
(43) Veröffentlichungstag der Anmeldung: **09.09.2026**
(21) Anmeldenummer: 25161999.5
(22) Anmeldetag: 06.03.2025
(51) Int. Cl.: H02K 7/20, H02K 9/08, H02K 9/19, H02K 9/04

(54) **FAHRMOTOR FÜR EIN SCHIENENFAHRZEUG**

(71) Anmelder: Stadler Rail AG, 9565 Bussnang (CH)
(72) Erfinder: Falke, Ewald, 900 St. Gallen (CH)
(74) Vertreter: Hepp Wenger Ryffel AG

(57) **Zusammenfassung**

Die Erfindung betrifft einen Fahrmotor (la, 1b, 1c), insbesondere für ein Schienenfahrzeug, umfassend ein Gehäuse (8) und einen im Gehäuse (8) angeordneten Stator (7) und einen Rotor (6) mit einer Motorwelle (10). Der Fahrmotor (la, 1b, 1c) weist weiter eine Kühlvorrichtung, durch welche der Fahrmotor (la, 1b, 1c) kühlbar ist, auf. Die Kühlvorrichtung weist eine Ventilatoreinheit mit einem Ventilator (2) auf. Die Ventilatoreinheit umfasst einen von einer Drehzahl der Motorwelle (10) unabhängig betriebenen Ventilatorantrieb (3). Die Ventilatoreinheit ist im oder am Gehäuse (8), vorzugsweise im Gehäuse (8), angeordnet. Die Erfindung betrifft auch ein Drehgestell mit einem solchen Fahrmotor (la, 1b, 1c) sowie ein Schienenfahrzeug mit mindestens einem Drehgestell.

## Beschreibung

Die Erfindung betrifft einen Fahrmotor, insbesondere für ein Schienenfahrzeug, ein Drehgestell mit einem Fahrmotor sowie ein Schienenfahrzeug mit mindesten einem solchen Drehgestell gemäss den Oberbegriffen der unabhängigen Ansprüche.

Fahrmotoren für Schienenfahrzeuge mit fest auf der Motorwelle montiertem internen Lüftungsrad sind bekannt. So beschreibt EP1100184 beispielsweise einen solchen Fahrmotor mit Umluftkühlung. Aus EP3024125 ist ein gekapselter Motor mit Flüssigkeitskühlung bekannt, wobei die vom Lüfter umgewälzte Luft dem Wärmetransport vom Rotor zum wärmeabführenden Fluidkreislauf dient. Jeder gekapselte wasser- oder luftgekühlte Motor hat einen internen Luftkreislauf, der die Abwärme des Rotors in/an den Stator transportiert. Von dort wird diese Abwärme, zusammen mit den Verlusten des Stators selbst, nach aussen abgegeben.

In beiden Varianten (Umluftkühlung oder gekapselte Motoren) ist der Umluftkreislauf abhängig von der Bewegung des Rotors. Ein solcher Motor weist in verschiedenen Betriebszuständen keine genügende Kühlung des Rotors auf, z.B. wenn er zu langsam dreht oder gar noch sehr heiss zum Stillstand kommt. Dies kann kurzbis mittelfristig zu Schäden am Motor führen.

Aus EP3819148 ist ein Traktionsmotor bekannt, der über einen rotorunabhängigen internen Lüfter verfügt und so besser bedarfsgerecht gekühlt werden kann. Allerdings ist dieser Motor durch den unabhängigen Lüfter, insbesondere durch dessen äussere Ansteuerung und Stromversorgung, aufwändig und durch die angesaugte Luft anfällig für Verschmutzung.

Es ist eine Aufgabe der Erfindung, die Nachteile im Stand der Technik zumindest teilweise zu überwinden. Es ist insbesondere eine Aufgabe der Erfindung, einen Fahrmotor mit vom Rotor unabhängigem Ventilator bereitzustellen, der auch bei geringer Motordrehzahl einen ausreichenden Wärmetransport vom Rotor an/in den Stator aufweist und zudem einfach in der Konstruktion ist. Es ist weiter eine Aufgabe der Erfindung, ein Drehgestell mit einem solchen Fahrmotor als auch ein Schienenfahrzeug mit mindestens einem solchen Drehgestell bereitzustellen.

Die Aufgaben werden zumindest teilweise von den Gegenständen der unabhängigen Ansprüche gelöst. Bevorzugte Ausführungsformen werden in den abhängigen Ansprüchen beschrieben.

Ein erster Aspekt der Erfindung betrifft einen Fahrmotor, insbesondere für ein Schienenfahrzeug. Der Fahrmotor umfasst ein Gehäuse und einen im Gehäuse angeordneten Stator und einen Rotor mit einer Motorwelle. Der Fahrmotor weist weiter eine Kühlvorrichtung, durch welche der Fahrmotor kühlbar ist, auf. Die Kühlvorrichtung weist eine Ventilatoreinheit mit einem Ventilator auf. Die Ventilatoreinheit umfasst einen von einer Drehzahl der Motorwelle unabhängig betriebenen Ventilatorantrieb. Die Ventilatoreinheit ist im oder am Gehäuse, vorzugsweise im Gehäuse, angeordnet ist.

Ein solcher Fahrmotor zeichnet sich dadurch aus, dass die nötige Leistung eines direkt am oder im Gehäuse arbeitenden Ventilators deutlich geringer ist als die von konventionellen, auf dem Dach eingebauten, Ventilatoren. Der Transport gekühlter Luft über komplizierte Luftkanäle entfällt. Die Kühlvorrichtung kann vorteilhaft dimensioniert werden. Auf separate Fahrmotorlüfter im Fahrzeug kann verzichtet werden. Ein solcher Fahrmotor weist dadurch eine einfache Konstruktionsweise auf.

Mit «unabhängig» ist vor allem eine mechanische Entkopplung der Motorwelle und der Ventilatoreinheit gemeint.

Die Motorwelle kann eine erste Rotationsachse aufweisen und der Ventilator kann eine zweite Rotationsachse aufweisen. Die erste Rotationsachse und die zweite Rotationsachse können im Wesentlichen orthogonal zu einer Fahrtrichtung ausgebildet sein. Die erste Rotationsachse und die zweite Rotationsachse können parallel beabstandet ausgebildet sein. Die erste Rotationsachse und die zweite Rotationsachse können identisch ausgebildet sein.

Es ist möglich, dass die erste Rotationsachse und die zweite Rotationsachse in Fahrtrichtung nacheinander in der gleichen Ausrichtung angeordnet sind. Dass die erste Rotationsachse und die zweite Rotationsachse identisch ausgebildet sind bedeutet, dass die erste Rotationsachse und die zweite Rotationsachse fluchtend ausgebildet sind.

Vorzugsweise weist der Ventilatorantrieb eine Induktionsvorrichtung auf, die derart mit der Motorwelle wirkverbunden ist, dass durch eine Rotation der Motorwelle Strom in den Ventilatorantrieb induzierbar ist.

Der Antrieb eines Ventilators über eine Induktionsvorrichtung zeichnet sich durch seine Effizienz aus. Ein entsprechender Fahrmotor weist eine vereinfachte Verkabelung auf. Es müssen weniger Komponenten im Fahrzeug verbaut werden. Er ist zudem einfacher zu warten und gestaltet sich somit wirtschaftlicher.

Besonders bevorzugt umfasst die Induktionsvorrichtung mindestens eine zur Motorwelle hin orientierte und mit dem Ventilatorantrieb verbundenen Induktionsspule und mindestens einen an der Motorwelle angeordneten Permanentmagneten. Bevorzugt sind mehrere Spulen und Permanentmagnete. Die Anzahl richtet sich insbesondere nach der Grösse des Motors und dem Leistungsbedarf des Ventilators. Die Spulen können indirekt, z.B. über zusätzliche Kabel und einen Umrichter mit dem Ventiltorantrieb verbunden sein, so dass ein Stromübertrag erfolgen kann.

Der Fahrmotor und die Motorwelle können mit einer ersten Drehzahl betrieben werden und der Ventilator kann mit einer zweiten, bedarfsgerechten Drehzahl betrieben werden. Der Fahrmotor ist somit weniger anfällig für Überhitzung.

Besonders bevorzugt ist der Ventilatorantrieb zwischen dem Rotor mit der Motorwelle und dem Ventilator angeordnet. Auf diese Weise kann die Induktionsvorrichtung besonders vorteilhaft angeordnet werden, so dass ein besonders effizienter Stromübertrag erfolgen kann. Ein ebenfalls im Gehäuse angeordneter Umrichter kann so mit Strom gespeist werden. Ein entsprechender Fahrmotor lässt sich besonders leicht realisieren.

Der Ventilatorabtrieb kann aber auch über Kabel von einem Traktionsumrichter des Fahrzeugs mit Strom beaufschlagt sein.

Weiter kann die Kühlvorrichtung eine Fluidkühlung des Fahrmotors umfassen, vorzugswiese in einer Aussenwand des Gehäuses. Die Fluidkühlung kann Wärme aus dem Gehäuse des Fahrmotors aufnehmen. Das Fluid ist vorzugsweise Wasser. Die von der Fluidkühlung aufgenommen Wärme kann an ein Kombinationskühlgerät abgeführt werden und somit in einem Heizen-Lüften-Kühlen-Rückkühlen (HLKR)-Kreislauf genutzt werden.

Besonders bevorzugt kann die gesamte Kühlvorrichtung im oder am Gehäuse angeordnet sein. Die Fluidkühlung des Fahrmotors führt, unabhängig von dessen Drehzahl, die Verlustleistung ab.

Vorzugsweise ist das Gehäuse nach aussen luftdicht verschlossen. Die Ventilatoreinheit kann die Luft in dem geschlossenen Kreislauf umwälzen und die Wärme an die Fluidkühlung abgegeben. Insbesondere bedeutet dies, es finden sich keine Öffnung im Gehäuse die eine Schutzklasse schlechter als IP67 aufweisen. Es ergibt sich eine besonders einfache Konstruktion eines Fahrmotors mit effizienten Wärmeabtransport.

Vorteilhafterweise weist der Ventilatorantrieb einen Energiespeicher auf, in welchem der über die Induktionsvorrichtung induzierte Strom speicherbar ist. Dies ermöglicht die Zwischenspeicherung des erzeugten Stroms, so dass dieser zu einem späteren Zeitpunkt vom Ventilator genutzt werden kann. Auf diese Weise kann der Ventilator individuell und bedarfsgerecht arbeiten, um das Risiko von Hitzeschäden zu vermeiden. Die Kühlung kann somit auch bei Stillstand des Rotors betrieben werden.

Weiter kann der Ventilatorantrieb einen Umrichter und/oder einen Spannungsregler aufweisen, durch den der Ventilatorantrieb mit elektrischen Strom beaufschlagbar ist, vorzugswiese aus dem Energiespeicher. Damit entfällt sowohl ein externer Frequenzumrichter sowie auch eine Verkabelung dafür.

Die Kühlvorrichtung kann auch eine lokale Steuereinheit aufweisen, die bevorzugt über eine temperaturabhängige Regelung des Ventilatorantriebs, insbesondere eine Regelung einer Drehzahl des Ventilators, verfügt. Dabei wird insbesondere die Temperatur im Fahrmotor gemessen und der temperaturabhängigen Regelung zugrunde gelegt. Die Temperatur kann dabei in Abhängigkeit des Isolationsmaterials, beispielsweise bei Kupfer- und Aluminiumlegierungen, variieren.

Somit können alle Komponenten für den Antrieb des Ventilators Teil der Kühlvorrichtung sein und in einer besonders bevorzugten Ausführungsvariante im Ventilatorantrieb verbaut sein. Eine aufwendige externe Steuerung ist nicht notwendig. Sensoren, Niederspannungskabel und Stecker entfallen. Die Konstruktion und die Wartung des Motors werden weiter vereinfacht.

Weiter ist denkbar, dass die Kühlvorrichtung über eine kabellose Kommunikationseinrichtung, insbesondere Bluetooth oder WLan, zu einem Schienenfahrzeug verfügt. Dies ermöglicht es unter anderem die Drehzahl des Ventilators zu kontrollieren und Rückmeldung von Temperatursensoren zu erhalten. Dann ist es möglich, die Drehzahl des Ventilators abhängig von den Messdaten des Temperatursensors zu steuern.

Es ist möglich, dass der Fahrmotor mindestens einen Sensor umfasst, mit dem die Temperatur des Fahrmotors feststellbar ist. Der Temperatursensor kann an dem Gehäuse und/oder an dem Rotor des Fahrmotors und/oder an dem Stator des Fahrmotors angeordnet sein.

Der Fahrmotor kann axial in Richtung seiner Motorwelle eine Baulänge von 25 cm bis 80 cm, insbesondere in Abhängigkeit der Spurweite, aufweisen.

Ein weiterer Aspekt der Erfindung betrifft ein Drehgestell für ein Schienenfahrzeug. Das Drehgestell umfasst einen Drehgestellrahmen mit zwei Längsträgern und einem Fahrmotor wie vorhergehend beschrieben. Der Fahrmotor ist zwischen den Längsträgern angeordnet, insbesondere derart, dass die Motorwelle im Wesentlichen senkrecht zu den Längsträgern angeordnet ist.

Durch eine derartige Anordnung kann das Drehgestell kompakt und stabil gefertigt werden. Durch eine Anordnung im Wesentlichen senkrecht zur Fahrtrichtung ist eine vorteilhafte Kraftübertragung von der Motorwelle auf den weiteren Antriebsstrang möglich. In einem solchen Drehgestell kann der Fahrmotor bedarfsgerecht gekühlt werden.

Bevorzugt weist das Drehgestell mindestens zwei Radsätzeund mindestens zwei Radsatzachsen auf.

Das Drehgestell kann eine drehgestellseitige Fluidleitung und eine schienenfahrzeugseitige Fluidleitung für die Fluidkühlung des Fahrmotors umfassen. Insbesondere können die Fluidleitungen mit einer Schnelltrennkupplung zum Trennen der drehgestellseitigen Fluidleitung von der schienenfahrzeugseitigen Fluidleitung versehen sein. Somit lassen sich die Leitungen schnell und einfach verbinden und trennen, was insbesondere den Einbau und die Wartung vereinfacht.

Ein weiterer Aspekt der Erfindung betrifft ein Schienenfahrzeug mit mindestens einem Drehgestell wie vorhergehend beschrieben. Ein derartiges Schienenfahrzeug weist im Wesentlichen die gleichen Vorteile auf wie ein Drehgestell wie vorhergehend beschrieben und ein Fahrmotor wie vorhergehend beschrieben.

Es ist möglich, dass jedes Drehgestell des Schienenfahrzeugs wie ein Drehgestell wie vorhergehend beschrieben ausgebildet ist. Es ist auch möglich, dass das Schienenfahrzeug angetriebene Schienenfahrzeugwagen umfasst, welche mit einem Drehgestell wie vorhergehend beschrieben ausgestattet sind sowie mit nicht angetriebene Schienenfahrzeugwagen, welche mit nichtangetriebenen Drehgestellen ausgebildet sind. Die angetriebenen Wagen des Schienenfahrzeugs können Endwagen sein. Es ist auch möglich, dass die angetriebenen Schienenfahrzeugwagen des Schienenfahrzeugs Mittelwagen sind und die Endwagen nicht angetrieben sind. Denkbar ist auch, dass ein Schienenfahrzeugwagen ein Drehgestell wie vorhergehend beschrieben umfasst und ein nicht angetriebenes Drehgestell.

Der Fahrmotor kann in einem Drehgestell unterhalb eines Wagenkastens angeordnet sein und mittels eines dazwischen geschalteten Getriebes mindestens einen Radsatz antreiben. Das Getriebe kann wie aus dem Stand der Technik bekannt gestaltet und ausgeführt sein, insbesondere die Aufhängung, der Einbau und die Federung.

Das Schienenfahrzeug kann eine Wärmesenke zur Nutzung der Abwärme des Motors aufweisen, insbesondere eine Heizvorrichtung für einen Passagierraum oder eine Sorptionsklimaanlage.

Ein weiterer Aspekt der Erfindung betrifft einen Fahrzeugwagen, insbesondere für ein Schienenfahrzeug wie vorhergehend beschrieben, mit einem Fahrmotor wie vorhergehend beschrieben. Der Fahrmotor kann unmittelbar unterhalb eines Wagenkastens des Fahrzeugwagens an einen Rahmen angeordnet sein. Radsätze können federgelagert mit dem Rahmen in geeigneter Weise und vorzugsweise mit Lenkern verbunden sein. Ein entsprechendes Schienenfahrzeug kann wie vorhergehend beschrieben angetriebene und nicht angetriebene, mit Drehgestellen und ohne Drehgestelle ausgeführte Fahrzeugwagen aufweisen.

Die Erfindung wird nachfolgend exemplarisch anhand von Figuren näher erläutert. Die Figuren stellen Ausführungsbeispiele dar und sind nicht limitierend zu verstehen. Es zeigen:
- Figur 1: einen ersten erfindungsgemässen Fahrmotor mit einem internen Umluftkreislauf mit unabhängig von der Motorwelle regelbaren internen Ventilator.
- Figur 2: einen zweiten erfindungsgemässen Fahrmotor mit einem unabhängig von der Motorwelle regelbaren Ventilator mit eigener Stromversorgung.
- Figur 3: einen dritten erfindungsgemässen Fahrmotor mit einem internen Umluftkreislauf mit unabhängig von der Motorwelle regelbaren Ventilator mit eigener Stromversorgung.
- Figur 4: eine Variante des Fahrmotors aus Figur 3 in einer am Fahrzeug eingebauten Ausführung.
- Figur 5a: zeigt schematisch einen erfindungsgemässen Fahrmotor, angeordnet in einem Drehgestell.
- Figure 5b: zeigt schematisch einen an einem Wagenkasten angeordneten Fahrmotor.

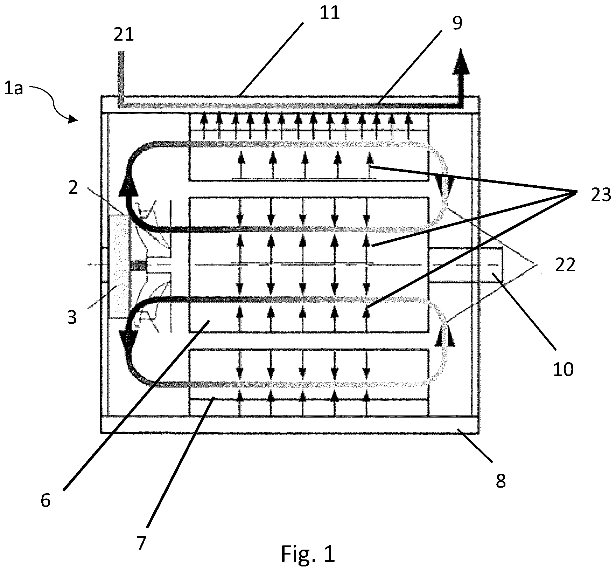

Figur 1 zeigt einen ersten erfindungsgemässen Fahrmotor 1a. Der Fahrmotor 1a weist ein luftdicht verschlossenes Gehäuse 8 auf. In diesem Gehäuse sind der Ventilator 2 sowie der Ventilatorantrieb 3 angeordnet. Weiter finden sich im Gehäuse 8 der Rotor 6 mit der Motorwelle 10 sowie der Stator 7. Der Ventilatorantrieb 3 ist aktiv, unabhängig von der Drehzahl der Motorwelle 10 regelbar. Der Ventilatorantrieb wird über Kabel von einem Traktionsumrichter des Fahrzeugs gespeist (nicht gezeigt). Der Fahrmotor 1a weist an seiner Aussenwand 11 eine Fluidkühlung 9 auf. Der Fahrmotor 1a arbeitet mit einem internen Umluftkreislauf. Der Ventilator 2 sorgt für eine Zirkulation des Luftstroms 22, dabei wird Wärme in Form von Wärmeströmen 23 an den Kühlfluidstrom 21 der Fluidkühlung 9 abgegeben und der Fahrmotor 1a somit gekühlt.

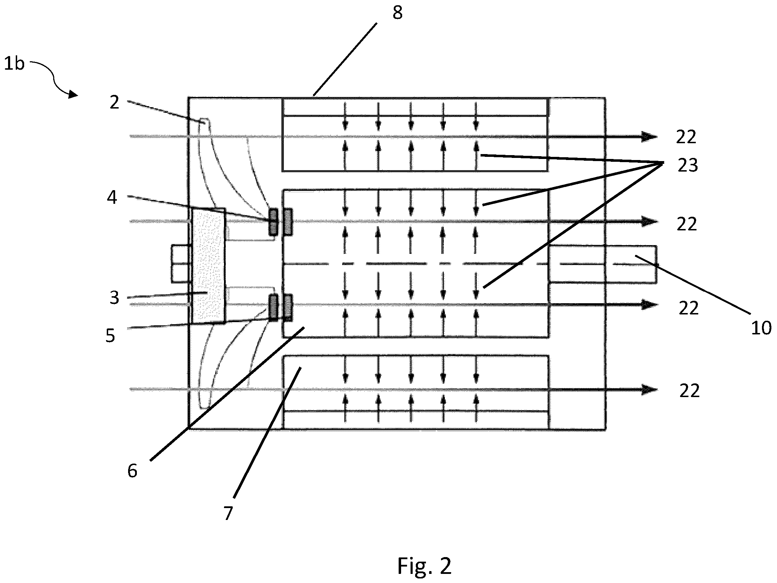

Figur 2 zeigt einen erfindungsgemässen Fahrmotor 1b mit einer Luftkühlung. Luftströme 22 können durch das Gehäuse 22 hindurchtreten. Der Ventilator 2 und der Ventilatorantrieb 3 sind auch hier im Gehäuse 8 angeordnet. Die Ventilatoreinheit umfasst Induktionsspulen 4, die zur Motorwelle 10 hin orientiert sind und die mit dem Ventilatorantrieb 3 verbunden sind. An der Motorwelle 10 sind Permanentmagnete 5 angebracht. Dreht sich die Motorwelle 10, so wird über die Permanentmagnete 5 Strom in die Induktionsspulen 4 induziert. Dieser Strom kann dann genutzt werden, um den Ventilator 2 anzutreiben.

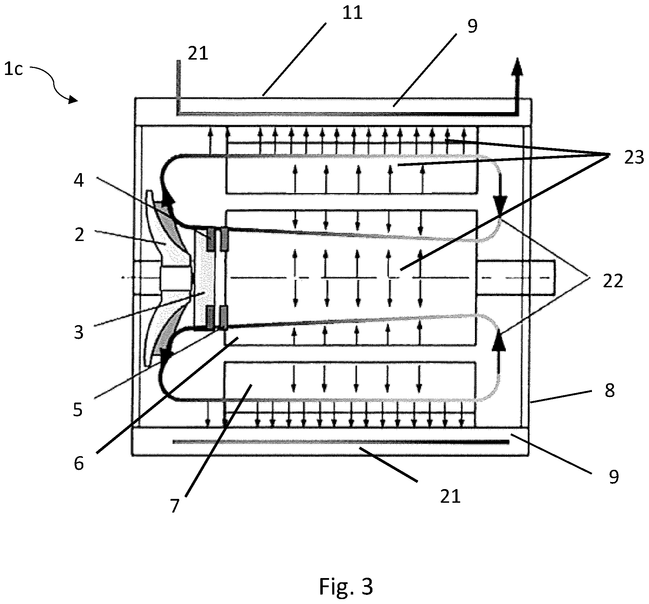

Figur 3 zeigt einen dritten erfindungsgemässen Fahrmotor 1c mit einem internen Umluftkreislauf und unabhängig vom Rotor 6 regelbaren Ventilator 2. Der Fahrmotor 1c weist auch hier ein luftdicht verschlossenes Gehäuse 8 auf. In diesem Gehäuse 8 sind ebenfalls der Ventilator 2 sowie der Ventilatorantrieb 3 angeordnet. Weiter finden sich im Gehäuse 8 der Rotor 6 mit der Motorwelle 10 sowie der Stator 7. Der Ventilatorantrieb 3 ist aktiv, unabhängig von der Drehzahl der Motorwelle 10 über die mit Bezug zu Figur 2 erläuterte Induktion regelbar. Der Fahrmotor 1c weist an seiner Aussenwand 11 wieder eine Fluidkühlung 9 auf. Der Fahrmotor 1c arbeitet mit einem internen Umluftkreislauf. Der Ventilator 2 sorgt für eine Zirkulation des Luftstroms 22, dabei wird Wärme in Form von Wärmeströme 23 an den Kühlfluidstrom 21 der Fluidkühlung abgegeben und der Fahrmotor 1c somit gekühlt.

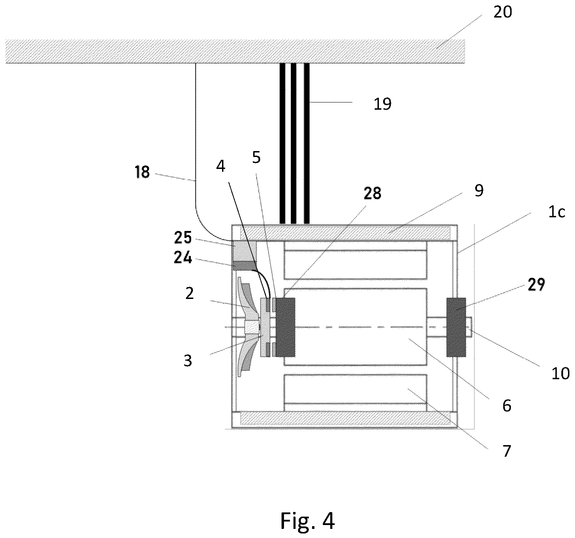

Figur 4 zeigt eine Variante des dritten erfindungsgemässen Fahrmotors 1c mit Motorlagern 28, 29, einer integrierten Antriebssteuerung 25 für den Ventilatorantrieb 3 und einen Energiespeicher 24. Die Antriebssteuerung 25 dieser vollintegrierten Lösung kann sowohl über ein Fahrzeugbus konformes Signalkabel 18 oder drahtlos erfolgen. Die Energiezufuhr zum Antrieb des Motors erfolgt weiterhin über ein 3 phasiges Leistungskabel 19 vom Wagenkasten 20 aus.

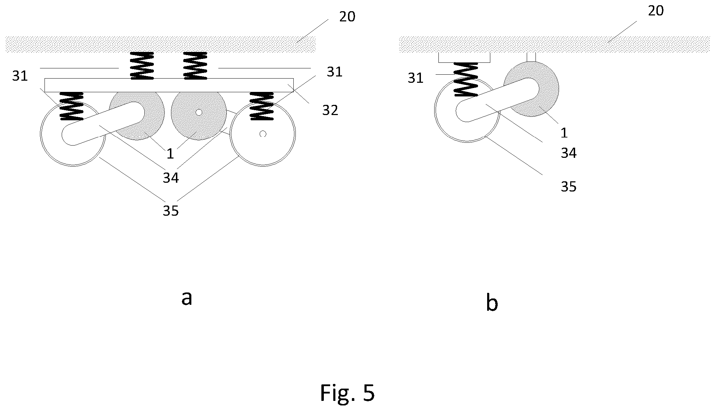

Figur 5a zeigt einen erfindungsgemässen Fahrmotor 1, der in einem Drehgestell 32 unterhalb eines Wagenkastens 20 angeordnet ist und mittels eines dazwischen geschaltetem Getriebes 34, das den bekannten Aufhängungs-, Einbau- und Federungsprinzipen folgt, einen Radsatz 35 antreibt. Der Motor 1 ist hier vollkommen geschlossen ausgeführt. Das Drehgestell 32 umfasst zwei Radsätze 35 und zwei Getriebe 34. Das Drehgestell 32 als auch die Radsätze 35 sind gefedert 31 gelagert.

Figur 5b zeigt eine Anordnung eines Fahrmotors 1 direkt an einem Wagenkasten 20. Dies ist mit geeigneten Befestigungen und ggf. auch Lenkern und Federelementen 31, unter dem Wagenkasten 20 montiert ist.

## Patentansprüche

1. Fahrmotor (1a, 1b, 1c), insbesondere für ein Schienenfahrzeug, umfassend ein Gehäuse (8) und einen im Gehäuse (8) angeordneten Stator (7) und einen Rotor (6) mit einer Motorwelle (10), wobei der Fahrmotor (1a, 1b, 1c) weiter eine Kühlvorrichtung, durch welche der Fahrmotor (1a, 1b, 1c) kühlbar ist, aufweist, wobei die Kühlvorrichtung eine Ventilatoreinheit mit einem Ventilator (2) aufweist, wobei die Ventilatoreinheit einen von einer Drehzahl der Motorwelle (10) unabhängig betriebenen Ventilatorantrieb (3) umfasst, **dadurch gekennzeichnet, dass** die Ventilatoreinheit im oder am Gehäuse (8), vorzugsweise im Gehäuse (8), angeordnet ist.

2. Fahrmotor (1a, 1b, 1c) nach Anspruch 1, wobei der Ventilatorantrieb (3) eine Induktionsvorrichtung aufweist, die derart mit der Motorwelle (10) wirkverbunden ist, dass durch eine Rotation der Motorwelle (10) Strom in den Ventilatorantrieb (3) induzierbar ist.

3. Fahrmotor (1a, 1b, 1c) nach Anspruch 2, wobei die Induktionsvorrichtung mindestens eine zur Motorwelle (10) hin orientierte und mit dem Ventilatorantrieb (3) verbundenen Induktionsspule (4) und mindestens einen an der Motorwelle (10) angeordneten Permanentmagneten (5) umfasst.

4. Fahrmotor (1a, 1b, 1c) nach einem der vorherigen Ansprüche, wobei die Kühlvorrichtung eine Fluidkühlung (9) des Fahrmotors (1a, 1b, 1c) umfasst, vorzugswiese in einer Aussenwand (11) des Gehäuses (8).

5. Fahrmotor (1a, 1b, 1c) nach einem der vorherigen Ansprüche, wobei das Gehäuse (8) nach aussen luftdicht verschlossen ist.

6. Fahrmotor (1a, 1b, 1c) nach einem der Ansprüche 2 bis 5, wobei der Ventilatorantrieb (3) einen Energiespeicher (24) aufweist, in welchem der über die Induktionsvorrichtung induzierte Strom speicherbar ist.

7. Fahrmotor (1a, 1b, 1c) nach einem der vorherigen Ansprüche, wobei der Ventilatorantrieb (3) einen Umrichter und/oder einen Spannungsregler aufweist durch den der Ventilatorantrieb (3) mit elektrischen Strom beaufschlagbar ist, vorzugswiese aus dem Energiespeicher (24).

8. Fahrmotor (1a, 1b, 1c) nach einem der vorherigen Ansprüche, wobei die Kühlvorrichtung eine lokale Steuereinheit (25) aufweist, die bevorzugt über eine temperaturabhängige Regelung des Ventilatorantriebs (3), insbesondere eine Regelung einer Drehzahl des Ventilators (2), verfügt.

9. Fahrmotor (1a, 1b, 1c) nach einem der vorherigen Ansprüche, wobei die Kühlvorrichtung über eine kabellose Kommunikationseinrichtung, insbesondere Bluetooth oder WLan, zu einem Schienenfahrzeug verfügt.

10. Drehgestell (32) für ein Schienenfahrzeug umfassend einen Drehgestellrahmen mit zwei Längsträgern und einem Fahrmotor (1a, 1b, 1c) nach einem der Ansprüche 1 bis 9, wobei der Fahrmotor (1a, 1b, 1c) zwischen den Längsträgern angeordnet ist, insbesondere derart, dass die Motorwelle (10) im Wesentlichen senkrecht zu den Längsträgern angeordnet ist.

11. Drehgestell (32) nach Anspruch 10, umfassend eine drehgestellseitige Fluidleitung und eine schienenfahrzeugseitige Fluidleitung für die Fluidkühlung (9) des Fahrmotors (1a, 1b, 1c), insbesondere mit einer Schnelltrennkupplung zum Trennen der drehgestellseitigen Fluidleitung von der schienenfahrzeugseitigen Fluidleitung.

12. Schienenfahrzeug mit mindestens einem Drehgestell (32) gemäss einem der Ansprüche 10 oder 11.

13. Schienenfahrzeug nach Anspruch 12, aufweisend eine Wärmesenke zur Nutzung der Abwärme des Motors, insbesondere eine Heizvorrichtung für einen Passagierraum oder eine Sorptionsklimaanlage.
